# FASCICULE DE BREVET EUROPEEN

(11) **EP 4 394 336 B1**
(45) Date de publication et mention de la délivrance du brevet: **25.06.2025**
(21) Numéro de dépôt: 23215431.0
(22) Date de dépôt: 11.12.2023
(51) Int. Cl.: G01F 23/14, G01F 23/18, G01F 23/80, G01M 3/32, G08B 13/00, G08B 23/00, G08B 21/18, G08B 29/18

(54) **PROCÉDÉ ET DISPOSITIF DE TRAITEMENT POUR LA SURVEILLANCE DU NIVEAU D'UN LIQUIDE**
VERFAHREN UND VORRICHTUNG ZUR DATENVERARBEITUNG ZUR ÜBERWACHUNG DES FÜLLSTANDS EINER FLÜSSIGKEIT
METHOD AND DATA PROCESSING DEVICE FOR MONITORING THE LEVEL OF A LIQUID

(30) Priorité: 16.12.2022 FR 2213629
(43) Date de publication de la demande: 03.07.2024
(73) Titulaire: SAGEMCOM ENERGY & TELECOM SAS, 92270 Bois-Colombes (FR)
(72) Inventeur: AMBERT, Sophie, 92270 Bois-Colombes (FR); BILLET, Claire, 92270 Bois-Colombes (FR)
(74) Mandataire: Novagraaf Technologies

(56) Documents cités:
- CN-A- 109 398 073
- CN-A- 111 980 104
- US-A1- 2015 310 678
- US-A1- 2022 028 189
- US-A1- 2022 228 983

## Description

### Domaine technique

Sont décrits un procédé et un dispositif de traitement pour la surveillance du niveau d'un liquide. Le procédé et le dispositif peuvent par exemple être mis en oeuvre pour surveiller le niveau d'un liquide dans un contenant, tel que le niveau de carburant dans une cuve, et détecter des événements liés aux variations de ce niveau, par exemple un vol de liquide.

### Arrière-plan technique

De nombreuses applications requièrent la surveillance du niveau d'un liquide. Une de ces applications est par exemple la surveillance du niveau de carburant dans une cuve alimentant un générateur de secours. De tels générateurs doivent entrer en action dès qu'une source d'énergie principale fait défaut, par exemple en cas de panne du réseau électrique ou, pour des applications autonomes, de dysfonctionnement de la source d'énergie (panneaux solaires, éoliennes) et/ou des batteries que la source d'énergie charge. Une autre application concerne des cuves domestiques ou encore des cuves dans le domaine agricole.

Le niveau d'un liquide peut être surveillé de manière connue en soi par la mise en oeuvre de capteur ou sondes adaptés. Le capteur ou la sonde permettent d'obtenir des données représentatives de l'évolution du niveau du liquide surveillé. Cependant, le signal obtenu peut être bruité ou présenter des informations ambigües. Le signal sera alors susceptible d'être mal interprété et donnera lieu à des levées d'alarme non justifiées.

Il est souhaitable de disposer d'un procédé de surveillance du niveau d'un liquide qui réduit ces inconvénients.

Les documents CN 111 980 104 A, US 2022/028189 A1 et US 2015/310678 A1 concernent le domaine technique considéré.

### Résumé

Un premier aspect concerne un procédé mis en œuvre par un dispositif de traitement comprenant un processeur comprenant
- l'obtention d'un signal, obtenu à partir de mesures d'une sonde, représentatif de l'évolution du niveau d'un liquide dans un contenant;
- la recherche , dans le signal, d'au moins un événement d'un premier type ; où un événement donné est associé à une ou plusieurs caractéristiques de signal permettant l'identification de l'événement donné dans le signal représentatif et où un événement du premier type est un événement pour lequel aucune alarme n'est générée ;
- la labellisation, de périodes de temps du signal représentatif correspondant à un événement du premier type, avec le ou les événements du premier type identifiés pour ces périodes ;
- suite à la labellisation, la recherche, dans le signal représentatif, d'au moins un événement donné d'un second type ; où un événement de second type est un événement pour lequel une alarme est générée ;
- la recherche d'un événement donné du second type comprenant la disqualification de périodes de temps du signal labellisées avec certains événements du premier type, et le maintien de périodes de temps de signal labellisées pour d'autres événements du premier type;
- la génération d'une alarme pour le ou les événements de second type identifiés dans le signal.

Par exemple, un événement du premier type pour lequel une période de temps est disqualifiée lors de la recherche d'un événement du second type donné est un événement susceptible de donner lieu à une identification erronée de l'événement du second type donné, et donc à une fausse alarme.

Par exemple, un événement du premier type pour lequel une période de temps est maintenue lors de la recherche d'un événement du second type donné est un événement qui peut cacher l'événement du second type donné.

Selon un ou plusieurs modes de réalisation, le procédé comprend, avant les phases de recherche, un prétraitement du signal représentatif, ledit prétraitement comprenant au moins l'un parmi
- une réduction de bruit sur base d'une décomposition par ondelettes ;
- une génération de données manquantes dans le signal représentatif.

Selon un ou plusieurs modes de réalisation du procédé, la sonde est une sonde à pression différentielle et la recherche d'un événement de premier type comprend la recherche d'un état bouché de la sonde.

Selon un ou plusieurs modes de réalisation du procédé, un état bouché de la sonde est identifié lors de la recherche si
- un motif à périodicité journalière est identifié dans le signal représentatif ; et
- pour une journée pour laquelle un motif périodique est identifié, un maximum du signal représentatif sur la journée est retrouvé dans un intervalle de temps autour du lever du soleil et un minimum du signal représentatif pour la journée est retrouvé dans un intervalle de temps comprenant le coucher du soleil, les intervalles de temps étant disjoints.

Selon un ou plusieurs modes de réalisation, le procédé comprend, lors de la phase de recherche d'au moins un événement du second type, des parties du signal correspondant à une période de temps incluant au moins le jour pour lequel un événement de sonde bouchée a été identifié.

Selon un ou plusieurs modes de réalisation du procédé, la recherche d'un événement de premier type comprend la recherche d'un événement de déconnexion et reconnexion de la sonde.

Selon un ou plusieurs modes de réalisation du procédé, la recherche d'une déconnexion et reconnexion d'une sonde comprend :
- l'identification dans le signal d'une phase de variation du signal comprenant une variation dans le sens négatif puis dans le sens positif, respectivement l'inverse ;
- la détermination que le niveau de liquide indiqué par le signal représentatif avant et après une phase de variation est sensiblement le même, et en cas de détermination positive, identifier un événement de déconnexion et de reconnexion sans événement de vol en parallèle, et en cas de détermination négative, identifier un événement de déconnexion et reconnexion avec potentiellement un événement de vol en parallèle.

Selon un ou plusieurs modes de réalisation du procédé, la recherche d'un événement de premier type comprend la recherche d'un événement de remplissage du contenant en liquide.

Selon un ou plusieurs modes de réalisation du procédé, la recherche d'un remplissage du contenant en liquide comprend :
- l'identification dans le signal d'une variation positive du niveau de liquide,
- la détermination si la variation positive est supérieure à un seuil de quantité de liquide pendant une période de temps donnée et, si la détermination est positive, identifier un événement de remplissage et dans le cas contraire, ne pas identifier un événement de remplissage.

Selon un ou plusieurs modes de réalisation du procédé, la recherche d'un événement de second type comprend la recherche d'un événement de remplissage du contenant en liquide.

Selon un ou plusieurs modes de réalisation du procédé, la recherche d'un événement de second type comprend la recherche d'un événement de vol de liquide.

Selon un ou plusieurs modes de réalisation du procédé, la recherche d'un événement de vol de liquide comprend:
- la recherche d'au moins une baisse du niveau de liquide dans le signal représentatif ;
- la détermination pour chaque baisse identifiée si cette baisse est supérieure à un seuil de quantité de liquide pendant une période de temps donnée et, si la détermination est positive, identifier un événement de vol et dans le cas contraire, ne pas identifier un événement de vol.

Selon un ou plusieurs modes de réalisation du procédé, lorsqu'une baisse identifiée suit ou se superpose avec un événement du premier type, le seuil de quantité de liquide pendant une période de temps donnée est inférieur par rapport au seuil utilisé lorsqu'une baisse identifiée ne suit pas ou ne se superpose pas avec un événement du premier type.

Dispositif de traitement comprenant des moyens pour mettre en œuvre un des procédés décrits. Ces moyens peuvent comprendre un processeur et une mémoire comportant du code logiciel qui, quand il est exécuté par le processeur, conduit le dispositif à mettre en œuvre l'un des procédés.

Support d'enregistrement lisible par un dispositif de traitement muni d'un processeur, ledit support comprenant du code logiciel qui, lorsque le logiciel est exécuté par un processeur d'un dispositif de traitement, conduit le dispositif de traitement à mettre en œuvre l'un des procédés.

### Brève description des figures

D'autres caractéristiques et avantages apparaitront au cours de la lecture de la description détaillée qui va suivre pour la compréhension de laquelle on se reportera aux dessins annexés parmi lesquels :
- la figure 1 est un diagramme bloc d'un système de surveillance du niveau de liquide selon un exemple de réalisation non limitatif ;
- la figure 2 est un diagramme bloc d'un dispositif de traitement selon un exemple de réalisation non limitatif ;
- la figure 3 est un algorigramme d'un procédé selon un exemple de réalisation ;
- la figure 4 est un algorigramme donnant des détails d'une phase de prétraitement du procédé ci-dessus selon un exemple de réalisation non limitatif ;
- la figure 5 est un algorigramme d'un procédé de réduction de bruit selon un exemple de réalisation non limitatif;
- la figure 6 est un ensemble de graphes représentatifs d'un signal initial et de signaux suite à une réduction de bruit ;
- la figure 7a est un graphe représentant un signal comportant des données manquantes ;
- la figure 7b est un graphe du signal de la figure 6 dans lequel les données manquantes ont été interpolées ;
- la figure 8 est un algorigramme d'une méthode de détection d'une sonde bouchée par mise en œuvre d'une autocorrélation selon un exemple de réalisation non limitatif;
- la figure 9 est un graphe d'un signal de niveau de liquide dans le cadre d'un exemple d'application non limitatif du procédé de la figure 8 ;
- la figure 10 est un graphe montrant le résultat de l'autocorrélation du signal de la figure 9 selon un exemple de réalisation non limitatif ;
- la figure 11 est un agrandissement d'une période du signal de la figure 8 ;
- la figure 12 représente un signal de niveau de liquide indiquant une sonde bouchée ;
- la figure 13 est un algorigramme d'une méthode de détection d'un événement de déconnexion de la sonde, selon un exemple de réalisation non limitatif ;
- la figure 14 comporte les graphes d'un signal de niveau de liquide et se sa dérivée dans le cadre de la détection d'un événement de déconnexion ;
- la figure 15 est un algorigramme d'une méthode de détection du remplissage selon un exemple de réalisation non limitatif ;
- la figure 16 comporte les graphes d'un signal de niveau de liquide et se sa dérivée dans le cadre de la détection d'un événement de remplissage ;
- la figure 17 est un graphe d'un signal de niveau de liquide illustrant la détection d'événements de vol en conjonction avec des événements de déconnexion de la sonde ;
- la figure 18 est un graphe d'un signal de niveau de liquide illustrant la détection d'événements de vol de liquide après un événement de remplissage de cuve ;
- la figure 19 est un graphe d'un signal de niveau de liquide représente un signal de niveau de liquide en centimètres sur une durée de plus d'un mois, avant prétraitement ;
- la figure 20 est un algorigramme d'une méthode de détection d'un événement du second type selon un exemple de réalisation particulier.

### Description détaillée

Dans la description qui va suivre, des éléments identiques, similaires ou analogues seront désignés par les mêmes chiffres de référence.

Les diagrammes blocs, algorigrammes et diagrammes de séquence de messages dans les figures illustrent l'architecture, les fonctionnalités et le fonctionnement de systèmes, dispositifs, procédés et produits programmes d'ordinateur selon un ou plusieurs exemples de réalisation. Chaque bloc d'un diagramme bloc ou chaque phase d'un algorigramme peut représenter un module ou encore une portion de code logiciel comprenant des instructions pour l'implémentation d'une ou plusieurs fonctions. Selon certaines implémentations, l'ordre des blocs ou des phases peut être changé, ou encore les fonctions correspondantes peuvent être mises en oeuvre en parallèle. Les blocs ou phases de procédé peuvent être implémentés à l'aide de circuits, de logiciels ou d'une combinaison de circuits et de logiciels, et ce de façon centralisée, ou de façon distribuée, pour tout ou partie des blocs ou phases. Les systèmes, dispositifs, procédés et méthodes décrits peuvent être modifiés, faire l'objet d'ajouts et/ou de suppressions tout en restant dans le cadre de la présente description. Par exemple, les composants d'un dispositif ou d'un système peuvent être intégrés ou séparés. Également, les fonctions décrites peuvent être mises en oeuvre à l'aide de plus ou de moins de composants ou de phases, ou encore avec d'autres composants ou à travers d'autres phases. Tout système de traitement de données adapté peut être utilisé pour l'implémentation. Un système ou dispositif de traitement de données adapté comprend par exemple une combinaison de code logiciel et de circuits, tels un processeur, contrôleur ou autre circuit adapté pour exécuter le code logiciel. Lorsque le code logiciel est exécuté, le processeur ou contrôleur conduit le système ou dispositif à mettre en oeuvre tout ou partie des fonctionnalités des blocs et/ou des phases des procédés ou méthodes selon les exemples de réalisation. Par exemple, le processeur ou contrôleur peut mettre en œuvre tout ou partie d'un procédé, et dans ce cadre également communiquer avec d'autres composantes pour les contrôler et/ou leur transmettre des données et/ou recevoir des données, pour la mise en œuvre du procédé. Le processeur ou contrôleur conduit donc, seul ou en conjonction avec d'autres composants d'un dispositif auquel il est intégré, à mettre en œuvre les étapes d'un procédé. Le code logiciel peut être stocké dans une mémoire ou un support lisible accessible directement ou à travers un autre module par le processeur ou contrôleur.

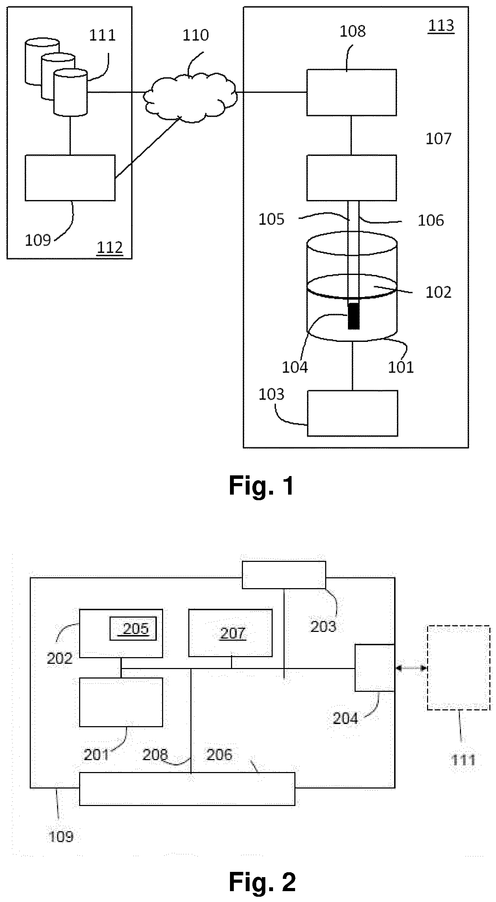

La figure 1 est un diagramme bloc d'un système de surveillance du niveau de liquide selon un exemple de réalisation non limitatif.

Le système de la figure 1 comprend une cuve 101 contenant un liquide 102. Le liquide est par exemple du carburant destiné à alimenter un appareil 103, par exemple un groupe électrogène. Une sonde 104 est placée dans la cuve de façon à mesurer une grandeur représentative de la hauteur du liquide 102. Selon le présent exemple de réalisation, la sonde est une sonde de pression différentielle qui mesure la différence de pression entre la pression atmosphérique et la pression dans la cuve - la hauteur (niveau) de liquide dans la cuve peut en être déduite de façon connue en soi. La sonde est par exemple placée au fond de la cuve. Le volume de liquide peut le cas échéant être déduit de cette information en fonction des caractéristiques de la cuve. La sonde présente un câble 105 et un capillaire 106 connectés à un boîtier de raccordement 107. Le capillaire permet d'appliquer la pression atmosphérique à l'arrière du capteur de la sonde. La pression de la colonne de liquide au-dessus de la sonde est ainsi mesurée. Les données de mesure de la sonde 104 sont recueillies par le boîtier de raccordement 107, convertis en hauteur de liquide et transmis à un dispositif contrôleur 108, dont un rôle est de collecter les données dans le temps et de les transmettre à un serveur 111 d'un centre de supervision 112 à travers un réseau de communication 110 (par exemple un réseau TCP/IP). Le serveur 111 stocke les données et les met à disposition d'un dispositif 114 permettant l'affichage des données - par exemple à un opérateur. Le dispositif 114 est par ailleurs adapté à transmettre des données de configuration au dispositif contrôleur 108 pour que ce dernier les implémente au niveau du site de production 113. Ces données de configuration peuvent par exemple comprendre les paramètres de déclenchement et d'arrêt du groupe électrogène 103. Un seul centre de supervision 112 peut interagir avec plusieurs sites de production. Les données représentatives de la hauteur de liquide sont par ailleurs transmises à un dispositif de traitement 109. Ce dispositif de traitement peut faire partie intégrante du centre de supervision 112, ou encore être connecté de façon temporaire.

Il s'agit là d'une implémentation typique d'un système où la cuve est à distance du dispositif de traitement ou du centre de contrôle qui héberge ce dispositif. Cependant, selon d'autres exemples de réalisation, le stockage et le traitement des données de la sonde 104 peuvent être faites plus proches de la cuve - dans ce cas, les fonctionnalités du dispositif de traitement 109 peuvent par exemple être intégrées dans le dispositif contrôleur 108. L'avantage du système illustré est que l'historique des données de la sonde est disponible dans le serveur 111 pour d'autres applications et peut ainsi être facilement récupéré pour être soumis au procédé décrit plus loin.

D'autres types de sondes ou capteurs qu'une sonde différentielle peuvent être mises en œuvre pour obtenir des données représentatives du niveau ou du volume de liquide.

Il est à noter que dans ce qui suit, les données obtenues de la sonde font référence tant aux mesures directes qu'à des données dérivées des mesures directes. Par exemple, pour une sonde différentielle, les 'données' peuvent comporter les mesures de pression, mais aussi des données obtenues à partir des mesures, tels la hauteur ou le volume de liquide. Dans ce qui suit, on prendra généralement comme exemple la hauteur ou le niveau du liquide, sachant que les principes exposés peuvent s'appliquer à d'autres représentations des mesures. Par ailleurs, on parlera également de 'signal', les données représentent un signal obtenu directement ou indirectement à partir des mesures de la sonde et représentant une grandeur physique.

Il est à noter que dans le cas d'une sonde utilisant un capillaire, ce dernier peut se boucher par condensation et la bulle d'eau de condensation peut se déplacer dans le capillaire.

La figure 2 est un diagramme bloc d'un dispositif de traitement 109 selon un exemple de réalisation. Le dispositif de traitement 109 comporte un processeur 201, une mémoire 202, une interface utilisateur 203, une interface de communication 204 configurée pour communiquer par exemple avec le serveur 111, un afficheur 206 adapté pour l'affichage de données à un utilisateur, ainsi qu'une mémoire de travail 207.

Les différentes composantes du dispositif de traitement 109 sont connectées à travers un bus de communication 208. La mémoire 202 comporte du code logiciel 205. La mémoire 207 est utilisée pour stocker et gérer les données à transmettre. Lorsque le processeur exécute le code logiciel 205, il conduit le dispositif de traitement de traitement 109 à mettre en œuvre un procédé selon un ou plusieurs exemples de réalisation décrits. Le dispositif de traitement 109 peut être ur ordinateur ou un autre dispositif de traitement adapté.

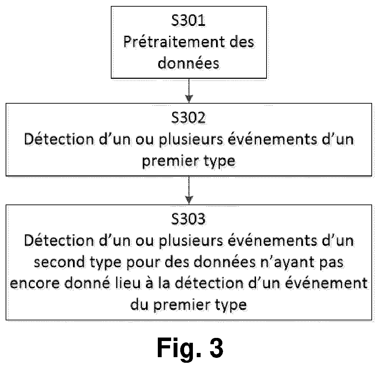

La figure 3 est un algorigramme d'un procédé selon un exemple de réalisation tant que tel non couvert par les revendications. Le procédé est mis en œuvre par le dispositif de traitement 109 et comprend trois étapes principales :
- Un prétraitement du signal (S301).
   Le prétraitement vise à préparer le signal en vue d'en améliorer la qualité pour limiter d'éventuelles décisions erronées lors les étapes de détection.
   Le prétraitement est en soi optionnel - sa mise en œuvre peut par exemple dépendre de la qualité des données entrantes.
- La détection, sur base du signal prétraité, d'un ou plusieurs événements d'un premier type autres que ceux recherchés (S302).
- La détection, dans le signal prétraité, d'un ou plusieurs événements d'un second type correspondant à des événements recherchés (S303). La seconde étape de détection utilise les résultats de la première étape en ce sens qu'en cas de détection d'événements du premier type, la partie du signal correspondante sera marquée en conséquence et ne pourra pas donner lieu à la détection d'événements du second type.

Les événements du premier type détectés au préalable ne seront pas requalifiés en événements du second type. Les événements du premier type ne donneront alors pas lieu à une détection erronée d'un événement du second type. En donnant la priorité dans l'ordre d'identification des événements aux événements du premier type, on réduit le nombre de fausses alarmes pour des événements du second type en ayant au préalable détecté des événements correspondant par exemple à des situations connues normales ou ne nécessitant pas une action particulière telle qu'une visite sur site. Une alarme est levée pour un événement du second type mais aucune alarme n'est levée pour les événements du premier type. L'expression 'alarme' désigne, de façon non limitative, toute indication (visuelle, sonore ou de labellisation spécifique des données identifiant un événement du second type, comme un label des données...) ou toute information ou encore tout signal adapté à informer un utilisateur de la présence d'un événement du second type. Une alarme est telle qu'elle distingue un événement de second type d'un événement du premier type. Aucune alarme n'est générée pour les événements du premier type.

La détection de certains événements du premier type disqualifie une période de temps durant laquelle l'événement survient pour une détection ultérieure d'un événement du second type.

Un traitement spécifique est effectué dans le cas où les données indiquent la possibilité d'un recouvrement d'un événement du second type par certains événements du premier type. En d'autres termes, un événement du second type peut être caché par un événement du premier type. C'est par exemple le cas pour certains événements du premier type comprenant une augmentation du niveau de liquide suivie d'une diminution - ou l'inverse - et qu'un événement de second type comprend uniquement une diminution du niveau (par exemple à la suite d'un vol), ou uniquement une augmentation de niveau (par exemple un remplissage, dans la variante où ceci est un événement du second type).

### Prétraitement

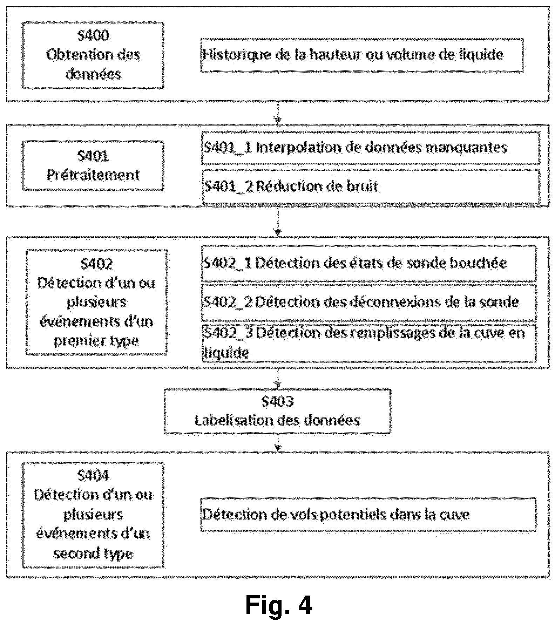

La figure 4 est un algorigramme qui détaille le procédé de prétraitement de la figure 3 et donne des exemples des événements dans le cadre du contexte de la figure 1.

Dans un premier temps (S400), l'historique des données représentatives du niveau de liquide sont obtenues par le dispositif de traitement.

L'historique peut comprendre des données sur plusieurs jours, par exemple sur une semaine. La périodicité d'échantillonnage ayant permis d'obtenir les données varie en fonction de l'application spécifique et des événements à détecter. Elle est par exemple inférieure à une heure, typiquement de 15 minutes.

Un prétraitement (S401) est ensuite appliqué aux données. Selon un exemple de réalisation, le prétraitement comporte une réduction de bruit. Selon un autre exemple de réalisation, le prétraitement comprend de plus la génération de données manquantes. Selon un exemple de réalisation, les données manquantes sont générées par interpolation, par exemple par interpolation linéaire entre les deux valeurs de données entourant un intervalle sans données.

La détection d'événements connus mais non recherchés et possédant des caractéristiques connues est ensuite réalisée (S402). Dans l'exemple de la figure 4, ces événements comprennent :
- Les états bouchés de la sonde
- Les déconnexions de la sonde
- Les remplissages de la cuve

Les données sont labellisées avec les événements détectés (S403).

La détection d'événements recherchés est alors effectuée (S403). Dans l'exemple de la figure 4, un événement de ce type est le vol de liquide dans la cuve.

Selon un autre exemple de réalisation, l'assignation d'un événement à un type donné peut être revue. Par exemple, un événement du premier type peut devenir un événement du second type ou vice-versa, en fonction des besoins d'une application particulière. Par exemple, le remplissage de la cuve peut être un événement pour lequel on cherche à lever une alarme, et donc un événement du second type.

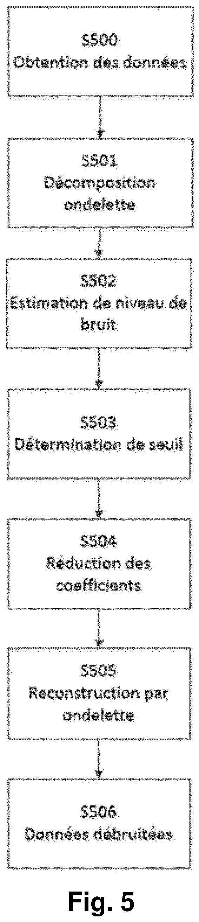

La figure 5 est un algorigramme d'un procédé de réduction de bruit selon un exemple de réalisation est comme suit. La réduction de bruit vise à préparer les données - ou le signal représenté par les données - pour les étapes de détection, notamment en réduisant les courtes mais hautes variations du signal représenté par les données pour limiter la possibilité que ces variations donnent lieu de façon erronée à la détection d'un événement. Il a été trouvé qu'un débruitage par ondelettes procure de bons résultats - un tel filtrage permet en effet de garder les propriétés locales du signal et de ne pas filtrer les caractéristiques par lesquelles les événements seront ensuite détectés. Par exemple et sans limitation, une décomposition par ondelettes de Daubechies peut être utilisée. L'ordre 4 peut être utilisé.

Selon le procédé de la figure 5, le dispositif de traitement obtient dans un premier temps les données représentatives du signal à traiter (S500). Une décomposition en ondelettes est ensuite effectuée (S501) - des coefficients correspondants sont ainsi obtenus. La décomposition est suivie d'une estimation du niveau de bruit (S502), la détermination d'un seuil (S503), et la réduction (S504) des coefficients de l'ondelette sur base de ce seuil, par suppression (ou mise à zéro) des coefficients inférieurs à ce seuil. Une reconstruction par ondelette (S505) du signal est alors effectuée pour obtenir (S506) le signal débruité (et par conséquent les données qui le représentent). Le seuil peut par exemple être déterminé par analyse statistique d'un échantillon de données connues. Le seuil est, à titre d'exemple non limitatif, égal à la variation standard du bruit du signal multiplié par la racine carrée de 2*In(N), où N est la taille du signal. La taille du signal est définie par le nombre de points de signal par période considérée. Pour un échantillon de signal toutes les 15 min donc pour une période d'une journée, la taille sera donc de 96 points.

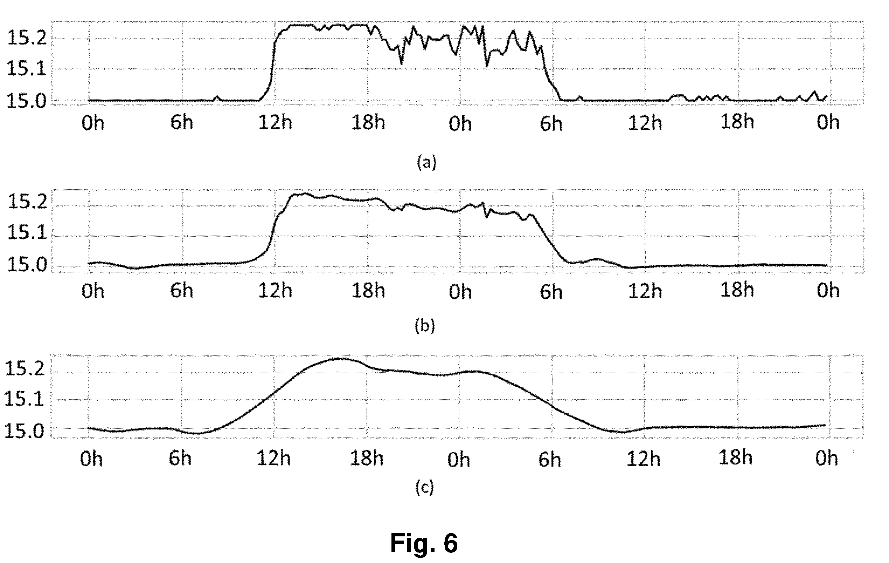

La figure 6 comporte trois graphes (a), (b) et (c). Le graphe (a) est un graphe représentant le signal initial de niveau de liquide en centimètres sur deux jours, du 18 août au 20 août. Le graphe (b) représente le même signal, débruité par ondelette comme décrit ci-dessus, tandis que le graphe (c) montre le signal du graphe (a), mais débruité avec un filtre Savitzy-Golay. En comparant les trois graphes, on voit que la réduction de bruit par ondelettes permet de préserver les propriétés locales sans les lisser autant que le filtre Savitzy-Golay.

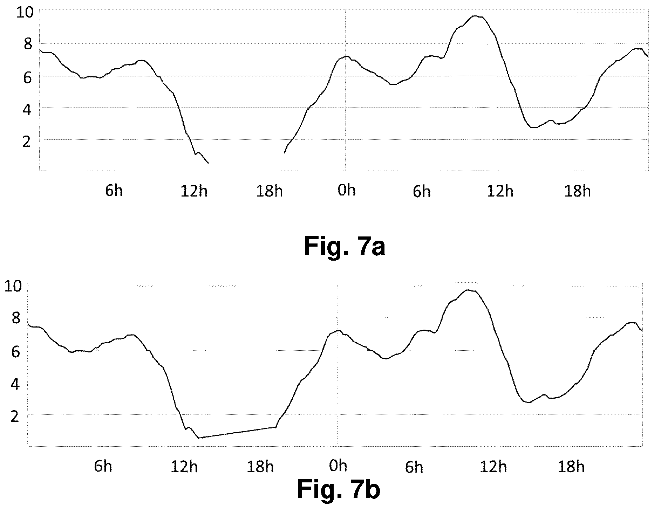

La figure 7a est un graphe représentant un signal initial de niveau de liquide en centimètres sur deux jours et comportant des données manquantes. La figure 7b est un graphe du même signal, où la partie manquante a été remplacée par des données interpolées.

### Détection d'événement non recherchés et à caractéristiques connues

La seconde étape cherche à identifier les événements non recherchés, tels une sonde bouchée ou une déconnexion de sonde, mais détectables par leurs caractéristiques afin d'éviter de les confondre avec des événements recherchés, tels un vol.

### Détection d'une sonde bouchée

Lorsque la sonde utilisée est une sonde à pression différentielle, elle détermine la différence entre la pression dans la cuve et la pression atmosphérique pour mesurer le niveau de liquide dans la cuve. Lorsque la sonde est bouchée, elle va donc mesurer la pression atmosphérique de l'air.

Cette particularité est utilisée dans le présent exemple de réalisation pour déterminer si la sonde est bouchée ou non. Plusieurs approches peuvent être utilisées :
Une première approche consiste à utiliser un historique de données labellisées pour des événements de sonde bouchée en conjonction avec un algorithme d'apprentissage machine supervisé (par exemple une machine à vecteurs de support). L'algorithme peut alors détecter des événements correspondant à une sonde bouchée dans les données de niveau de liquide à analyser.

Une seconde approche se base sur des données météorologiques (pression, ou encore température (la pression dépendant de la température) ...) ou des données de production de panneaux solaires, sur la période considérée. Une sonde est considérée comme bouchée si une corrélation existe entre d'une part les données météorologiques ou les données de production et d'autre part les données de niveau de liquide.

Une troisième approche met en œuvre une autocorrélation des données de niveau de liquide. L'avantage de cette méthode est qu'elle ne nécessite pas d'historique de données ou de données telles que décrites avec la seconde approche. De plus, un passage dans le domaine fréquentiel n'est pas nécessaire.

L'autocorrélation est utilisée pour détecter une répétition périodique d'un motif dans les données de niveau de signal.

L'autocorrélation est réalisée sur les données de deux journées consécutives. Si l'autocorrélation présente une forme périodique, alors une périodicité est détectée dans les données auto-corrélées. On identifie alors le premier pic (après le pic central) et la première vallée suivant ce pic. L'existence d'un pic indique une périodicité dans les données. La durée de la période peut être déterminée si nécessaire par l'intervalle de temps entre le premier pic et la première vallée.

Le dispositif de traitement vérifie par ailleurs, dans les données de niveau de liquide, l'existence du niveau maximum et du niveau minimum dans des intervalles de temps spécifiques dans la journée. Ces intervalles de temps spécifiques sont choisis pour correspondre respectivement à des intervalles dans lesquels un maximum et un minimum sont attendus par rapport à l'évolution habituelle de la pression atmosphérique dans une journée. Typiquement, un maximum se retrouve dans un intervalle de temps comprenant le lever du soleil et un minimum se retrouve dans un intervalle de temps comprenant le coucher du soleil, les variations de pression atmosphériques étant corrélées avec ces deux événements.

Par exemple, l'intervalle de temps dans lequel un maximum doit être localisé est de 6 heures du matin et midi, et l'intervalle de temps dans lequel un minimum doit être localisé est de 16 heures et 20 heures. Il y aura au moins 4 heures mais pas plus de 14 heures entre le pic et la vallée, ce qui distinguera le motif périodique dû à la pression atmosphérique de motifs dus à d'autres phénomènes. Il est à noter que les intervalles précis sont donnés en tant qu'illustrations des principes exposés mais que les limites de ces intervalles peuvent être différentes dans d'autres implémentations. Par exemple, on peut également vérifier qu'on a le minimum de la journée entre 14 heures et 18 heures et le maximum entre 6 heures et 9 heures.

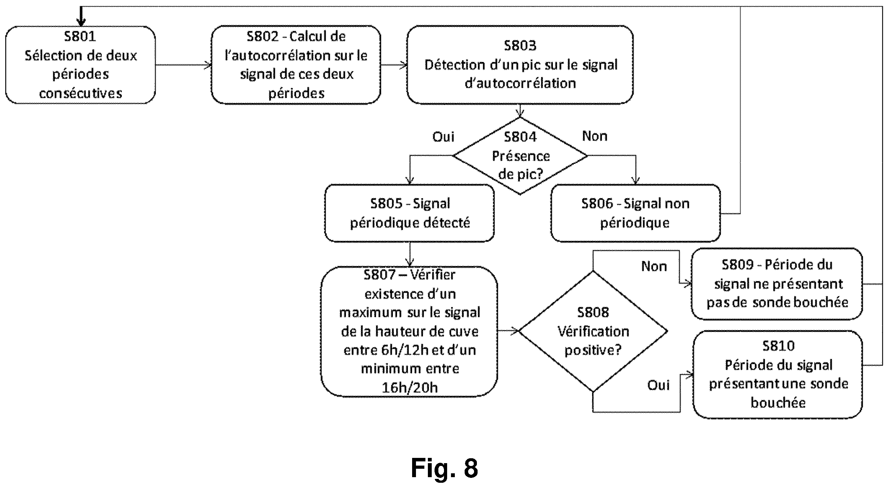

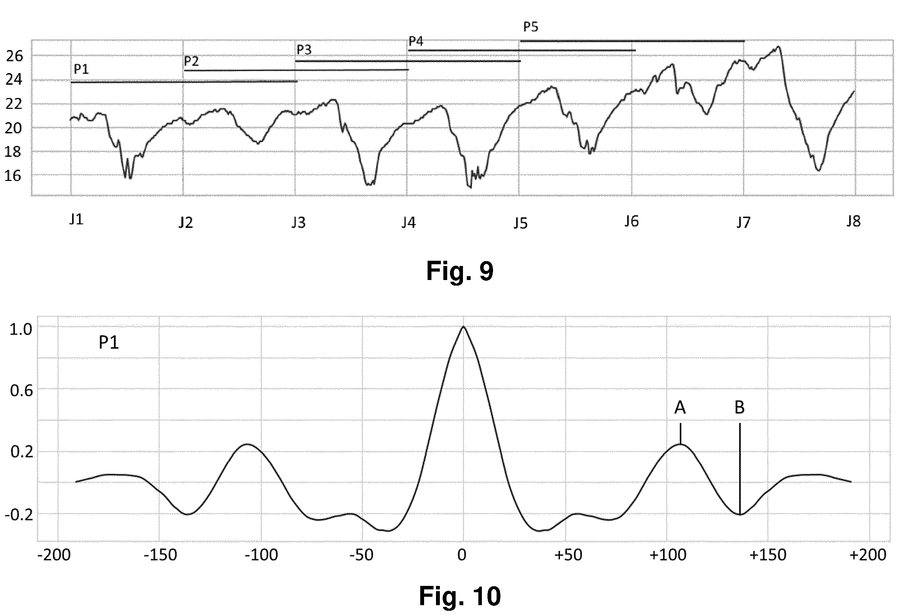

La figure 8 est un algorigramme d'une méthode de détection d'une sonde bouchée par mise en œuvre d'une autocorrélation selon un exemple de réalisation. La figure 9 est un graphe d'un signal de niveau de liquide en centimètres sur sept jours qui servira pour donner un exemple détaillé en lien avec la méthode de la figure 8. La méthode est appliquée successivement à des données correspondant à l'intervalle Px de deux périodes consécutives d'un jour chacune, étant donné qu'on cherche à détecter une périodicité journalière d'un phénomène. On prend par exemple en compte les données sur l'intervalle P1 comprenant le premier et le second jour, puis celles sur l'intervalle P2 comprenant le second et le troisième jour etc... jusqu'à ce que toutes les données aient été traitées.

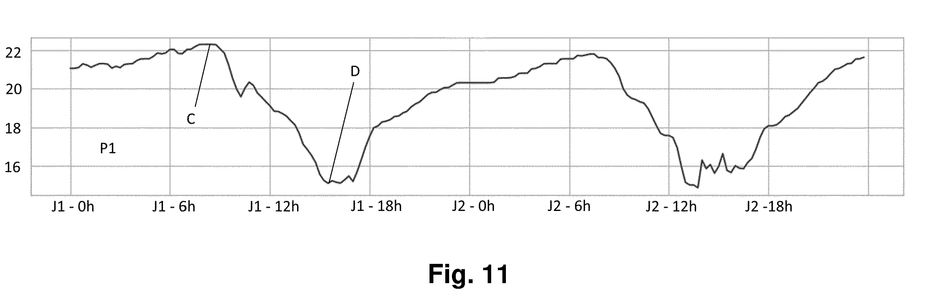

Une sélection des données correspondant à une période couvrant deux jours est donc effectuée dans un premier temps (S801) dans les données prétraitées. Une autocorrélation est réalisée sur le signal de ces deux périodes (S802). La figure 10 est un graphe montrant le signal auto corrélé pour la période P1. Il est ensuite déterminé (S803, S804) si au moins un pic existe dans le signal d'autocorrélation en dehors du pic central - dans la figure 10, ce pic est noté 'A', et la vallée qui suit est notée 'B'. Si cela n'est pas le cas, on conclut qu'aucun motif périodique n'est présent dans le signal (S806). Si par contre au moins un pic est détecté, on conclut qu'il y a bien un motif périodique (S805). Dans ce cas, une vérification supplémentaire est effectuée en S807 et S808 par rapport au signal de niveau de liquide (illustré par la figure 11, qui est un agrandissement de la période P1 du signal de la figure 9) pour déterminer si le signal de niveau de liquide possède bien un maximum dans une première tranche horaire dans lequel un maximum est attendu en fonction de l'évolution de la pression atmosphérique dans une journée. On fait de même pour un minimum, par rapport à une seconde tranche horaire. Le minimum et le maximum sont notés 'C' et 'D' dans la figure 11. On considère ici le minimum et le maximum du signal sur un jour. Si cette vérification est négative (S809), et bien qu'un motif périodique ait été détecté, il est conclu que la sonde n'est pas bouchée, car cette périodicité ne paraît pas liée à une variation de pression atmosphérique. Dans le cas contraire (S810), la sonde est considérée comme bouchée. Dans le cas de la figure 10, la sonde est considérée comme bouchée.

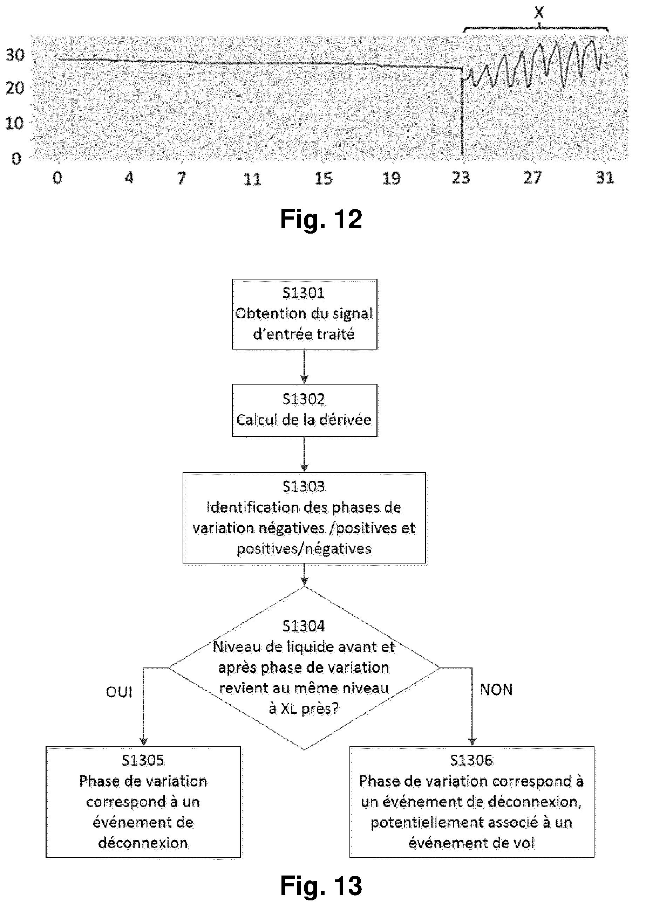

La figure 12 est un graphe qui représente un signal de niveau de liquide en centimètres sur 31 jours, la sonde se bouchant le 23^{e} jour (période marquée 'X' dans la figure). Ce graphe montre tant la périodicité journalière du signal à partir du 23^{e} jour que la localisation d'un maximum le matin et d'un minimum l'après-midi pour chaque jour où la sonde est bouchée. L'observation de ce graphe valide le choix des caractéristiques retenues pour la détection d'une sonde bouchée.

Une sonde bouchée est un événement donnant particulièrement lieu à une détection erronée d'autres événements, tels le remplissage ou un vol. L'association d'une détection de sonde bouchée et d'une détection subséquente d'un événement de vol est un mode de réalisation particulièrement utile.

Selon un mode de réalisation, les deux journées pendant lesquelles une sonde bouchée est identifiée sont exclues de la détection d'un vol de liquide. Le signal (i.e. les données correspondantes) est labelisé avec la nature de l'événement trouvé pour cet intervalle de temps.

### Détection d'une déconnexion de sonde

Une déconnexion de sonde correspond par exemple à l'enlèvement, puis au replacement d'une sonde. Cela peut être le cas lors d'une opération de maintenance. La sonde peut aussi être déconnectée par une personne mal intentionnée. Un vol de liquide peut être commis lors d'une phase de déconnexion.

La détection de la déconnexion d'une sonde est basée sur la détection de variations positives et négatives, ou négatives et positives du niveau de liquide sur une durée limitée dans le temps, et sur base d'une comparaison du niveau de liquide avant et après la variation.

La figure 13 est un algorigramme d'une méthode de détection de la déconnexion (suivie de la reconnexion) d'une sonde selon un mode de réalisation. Le signal prétraité est utilisé comme base pour la détection (S1301). Dans un premier temps, une dérivée du signal est obtenue (S1302). Les phases de variation positives/négatives ou négatives/positives sont ensuite identifiées dans le signal dérivé (S1303) - une telle phase correspond dans le signal de niveau de liquide à soit une augmentation de niveau, puis à une baisse de niveau - ou l'inverse - pendant un laps de temps ayant une durée maximale. Selon le présent exemple, on retient les phases avec des variations supérieures à un seuil 'XL' pendant un temps T. A titre d'exemple non limitatif, dans le cadre de certaines applications, XL est par exemple égal à la précision de la sonde (20 litres dans le cadre d'un exemple réel) et T est de deux heures.

Les phases de variation détectées sont ensuite vérifiées individuellement - les niveaux de liquide avant et après une phase de variation sont comparés. Il est déterminé si le liquide revient au même niveau ou pas (S1304). Selon le présent exemple, cette vérification est faite à XL près. Si le niveau du liquide revient sensiblement au même niveau, on considère qu'il y a eu un événement de déconnexion, mais à priori sans vol de liquide en parallèle (S1305). Si le niveau de liquide est considéré comme ne revenant pas au même niveau et est plus faible qu'avant la phase de variation, on considère qu'il y a eu un événement de déconnexion, avec potentiellement un vol associé (S1306). Selon un exemple non limitatif, les niveaux avant et après une phase de variation sont pris respectivement 30 minutes avant et 30 minutes après la phase de variation, par exemple dans le cas où la période d'échantillonnage des données est de 15 minutes.

Le signal (i.e. les données correspondantes) est labelisé avec la nature de l'événement trouvé pour l'intervalle de temps correspondant à la phase de variation.

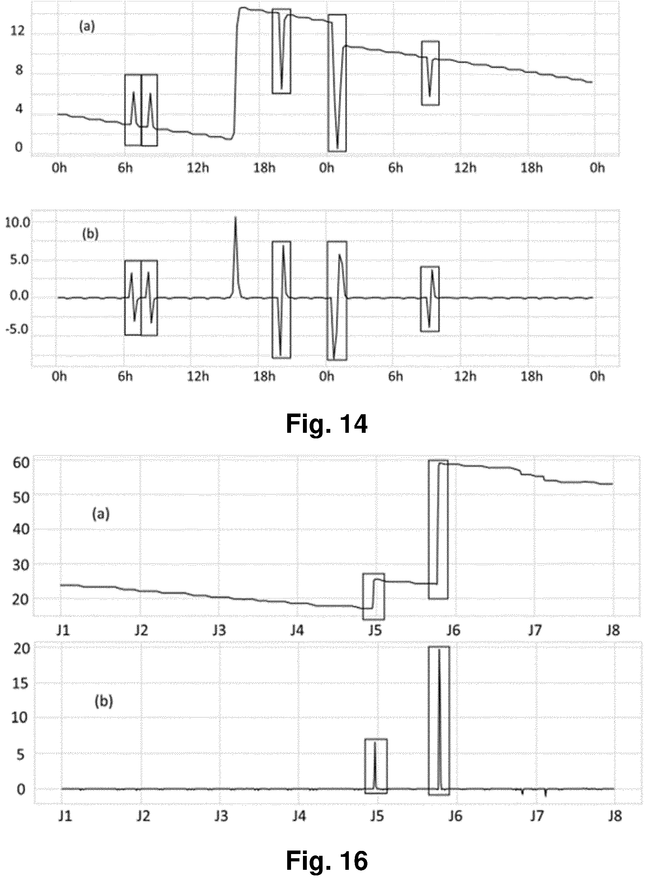

La figure 14 comprend deux graphes montrant un signal de niveau de liquide en centimètres sur deux jours (référence (a)) ainsi que sa dérivée (référence (b)). Les rectangles identifient les phases de variation positive/négative ou négative/positive. Dans le graphe du signal de niveau de liquide la phase de variation à 0h entre les deux jours correspond à un événement de déconnexion avec vol possible au vu de la différence de niveau avant et après la phase de variation. Les autres phases de variation correspondent à une déconnexion/reconnexion simple.

### Détection d'un événement de remplissage de cuve

Un remplissage est défini comme une variation positive du niveau de liquide au-dessus d'un seuil de quantité de liquide pendant une période de temps donnée.

La méthode de détection d'un remplissage de cuve selon le présent exemple de réalisation est similaire à celle utilisée pour la détection d'une déconnexion, en considérant cependant uniquement les variations positives du niveau de liquide.

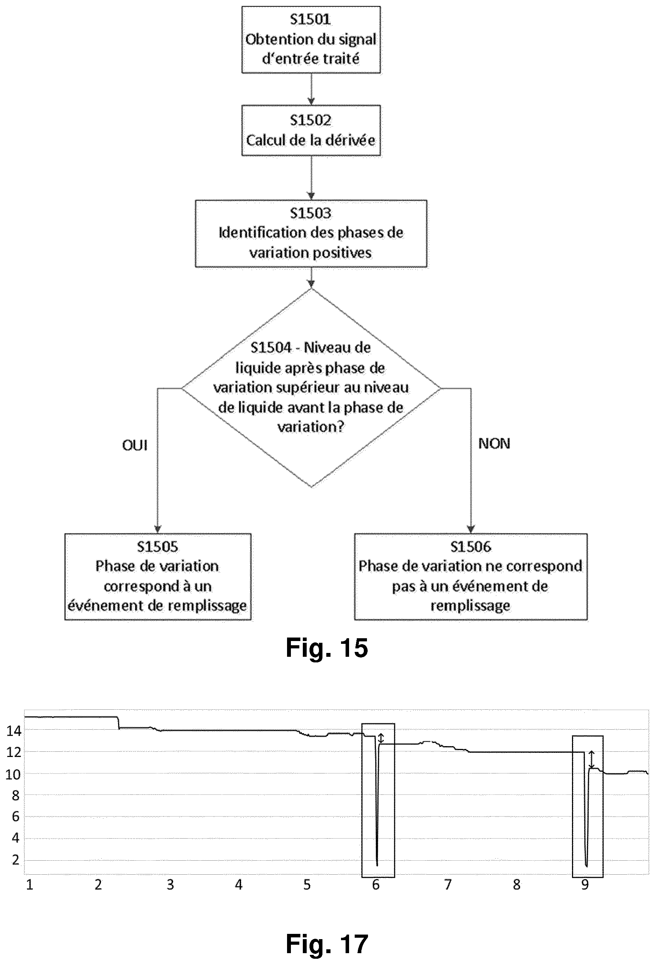

La figure 15 est un algorigramme d'une méthode de détection du remplissage selon un exemple de réalisation. Le signal prétraité est utilisé comme base pour la détection (S1501). Dans un premier temps, une dérivée du signal est obtenue (S1502). Les phases de variation positives sont ensuite identifiées dans le signal dérivé (S1503). Selon le présent exemple, on retient les phases avec des variations supérieures à un seuil 'XL' pendant un temps T. A titre d'exemple non limitatif, dans le cadre de certaines applications, XL est par exemple égal à la précision de la sonde (20 litres dans le cadre d'un exemple réel) et T est de deux heures.

Les phases de variation détectées sont ensuite vérifiées individuellement - les niveaux de liquide avant et après une phase de variation sont comparés. Il est déterminé si le niveau de liquide après une phase de variation est supérieur au niveau de liquide avant la phase de variation (S1504). Selon le présent exemple, cette vérification est faite à XL près. Si la vérification donne un résultat positif, alors un événement de remplissage est identifié (S1505). Dans le cas contraire, la variation constatée ne correspond pas à un événement de remplissage (S1506). Selon un exemple non limitatif, les niveaux avant et après une phase de variation sont pris respectivement 30 minutes avant et 30 minutes après la phase de variation, par exemple dans le cas où la période d'échantillonnage des données est de 15 minutes.

Le signal (i.e. les données correspondantes) est labelisé avec la nature de l'événement trouvé pour l'intervalle de temps correspondant à la phase de variation.

La figure 16 comprend deux graphes montrant un signal de niveau de liquide en centimètres sur sept jours (référence (a)) ainsi que sa dérivée (référence (b)). Les rectangles identifient les phases de variation positive. Dans l'exemple de cette figure, les deux variations positives en fin de jour 4 et en fin de jour 5 sont identifiées comme des événements de remplissage.

Selon un mode de réalisation particulier, l'événement de remplissage de cuve est un événement du second type, c'est-à-dire un événement recherché. Dans ce cas, la détection de cet événement n'est entreprise qu'après la détection des événements du premier type.

### Détection d'événement recherchés

Une fois les étapes de prétraitement et d'identification des événements non recherchés effectués, la troisième étape pour l'identification des événements recherchés dont les caractéristiques sont connues est abordée. Selon le présent exemple de réalisation, ces événements recherchés comprennent le vol de liquide et/ou le remplissage de la cuve.

L'identification d'un événement de remplissage a déjà été décrite. Dans ce qui suit, la détection de l'événement de vol selon un exemple de réalisation va être décrite.

### Détection d'un événement de vol de liquide

Un vol de liquide peut intervenir avec ou sans lien avec un autre événement. Trois exemples d'un événement de vol sont comme suit:
- Lors d'un événement de déconnexion tel que précédemment décrit, une baisse du niveau de liquide constatée après la reconnexion par rapport au niveau de liquide avant la déconnexion est potentiellement représentative d'un vol de liquide. Selon un exemple de réalisation, le niveau de cette baisse lors de l'événement de déconnexion est comparé à un seuil. Ce seuil est selon le présent exemple un taux minimal de baisse de quantité de liquide par unité de temps. Ce taux peut être défini par rapport à des statistiques de vols, notamment en termes de volume de liquide. Selon un exemple de réalisation, ce taux est de 12 litres / 15 minutes. Dans le cadre du présent exemple, la durée choisie pour le calcul du taux est prise égale à la périodicité (granularité) des données de niveau de liquide.
   Lorsque le taux est atteint ou franchi, un événement de vol est identifié.
   La figure 17 illustre une telle situation. Cette figure est un graphe du signal de niveau de liquide par centimètres sur une durée de neuf jours. Deux événements de déconnexion sont identifiés par des cadres rectangulaires correspondant à des événements précédemment labellisés dans le signal de niveau de liquide.
- Un vol peut également intervenir après un remplissage de cuve.

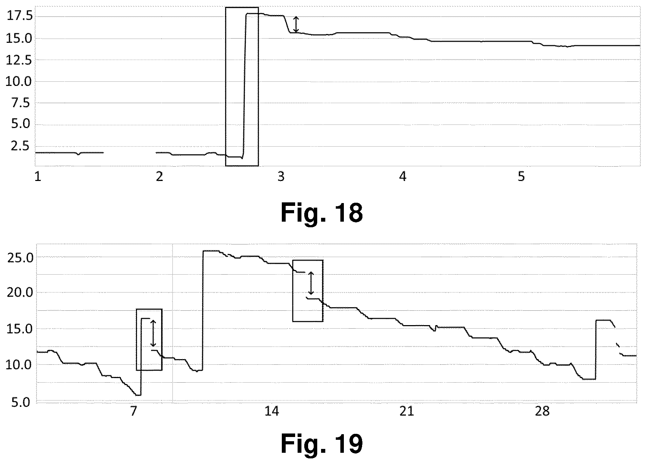

   La figure 18 est un graphe du signal de niveau de liquide en centimètres sur cinq jours. Un remplissage est identifié par la variation positive encadrée de niveau de liquide. Ce remplissage est suivi d'une baisse de niveau de liquide potentiellement indicatrice d'un vol de liquide. Comme pour l'exemple du vol après déconnexion, un taux de baisse en quantité de liquide par unité de temps peut être utilisé pour décider si une baisse correspond ou non à un événement de vol. Selon un exemple de réalisation, ce taux est identique au taux du cas ci-dessus lié à l'événement de déconnexion.
- Un vol peut également intervenir lorsque le signal de niveau de liquide présente des données manquantes sur une période d'une durée T et qu'une baisse du niveau de liquide indiqué par la sonde est constatée à la reprise des données par rapport au moment de l'arrêt des données. Comme pour les deux cas précédents, un taux de baisse en quantité de liquide par unité de temps peut être utilisé pour décider si une baisse correspond ou non à un événement de vol.
   Une telle situation est illustrée par la figure 19, qui représente le signal de niveau de liquide en centimètres sur une durée de plus d'un mois, avant prétraitement. Les données manquantes, identifiées par des cadres dans la figure, auront donné lieu à interpolation linéaire lors de la phase de prétraitement.

En dehors des cas mentionnés ci-dessus, selon le présent exemple de réalisation, une baisse du niveau de liquide au-delà d'une quantité par unité de temps est indicative d'un événement de vol. Dans certaines applications, un vol de liquide peut avoir une durée supérieure à deux heures.

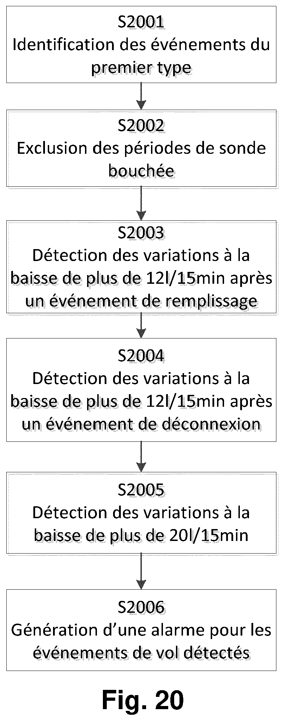

La figure 20 est un algorigramme d'une méthode de détection d'un événement du second type selon un exemple de réalisation particulier. Dans cet exemple de réalisation, l'événement de second type est un vol. Dans d'autres exemples, c'est un remplissage. Dans d'autres exemples, les deux événements vol et remplissage sont tous les deux des événements du second type.

Selon l'algorigramme de la figure 20 :
On identifie dans un premier temps (S2001) les événements du premier type et on labelise le signal avec les événements détectés.

Dans le cadre du présent exemple, on cherche à identifier les événements de sonde bouchée, de remplissage de cuve, de déconnexion.

Les périodes du signal de niveau de liquide correspondant à une sonde bouchée sont exclues de la suite de l'analyse du signal (S2002).

On analyse ensuite en le signal de niveau de liquide pour détecter l'événement du second type (ou les événements du second type).

Dans le cadre du présent exemple, un événement de vol de liquide est identifié dans les cas suivants :
- S2003 - après un événement de remplissage, des variations de plus de 12I/15 minutes ;
- S2004 - après un événement de déconnexion de sonde, des variations à la baisse de plus de 12I/15 minutes ;
- S2005 - en cas de variation à la baisse de plus de 20I/15 minutes.

Une alarme est générée pour les événements de vol détectés (S2006).

Concernant les taux de variation pour S2003 et S2005, il a été constaté statistiquement que pour un vol, la variation pouvait se situer entre 12 et 15 L/15min dans le cas où le vol est associé avec d'autres événements. De tels autres événements comprennent le remplissage comme ci-dessus, ou encore le fait que le générateur ne tourne pas. Dans de tels cas, le seuil de variation en S2005 n'est pas toujours suffisant pour détecter ce type de vol. La détection est ainsi affinée.

### SIGNES DE REFERENCE

101 - Cuve
102 - Liquide
103 - Appareil consommateur de liquide
104 - Sonde
105 - Câble
106 - Capillaire
107 - Boîtier de raccordement
108 - Dispositif contrôleur
109 - Dispositif de traitement
110 - Réseau de communication
111 - Serveur
201 - Processeur
202 - Mémoire
203 - Interface utilisateur
204 - Interface de communication
205 - Code logiciel
206 - Afficheur
207 - Mémoire de travail
208 - Bus de communication

## Revendications

1. Procédé mis en œuvre par un dispositif de traitement (109) comprenant un processeur comprenant
- l'obtention (S400) d'un signal, obtenu à partir de mesures d'une sonde, représentatif de l'évolution du niveau d'un liquide dans un contenant;
- la recherche (S402), dans le signal, d'au moins un événement d'un premier type ; où un événement donné est associé à une ou plusieurs caractéristiques de signal permettant l'identification de l'événement donné dans le signal représentatif et où un événement du premier type est un événement pour lequel aucune alarme n'est générée ; **caractérisé par**
- la labellisation (S403), de périodes de temps du signal représentatif correspondant à un événement du premier type, avec le ou les événements du premier type identifiés pour ces périodes ;
- suite à la labellisation, la recherche, dans le signal représentatif, d'au moins un événement donné d'un second type ; où un événement de second type est un événement pour lequel une alarme est générée ;
- la recherche d'un événement donné du second type comprenant la disqualification de périodes de temps du signal labellisées avec certains événements du premier type, et le maintien de périodes de temps de signal labellisées pour d'autres événements du premier type;
- la génération d'une alarme pour le ou les événements de second type identifiés dans le signal.

2. Procédé selon la revendication 1, comprenant avant les phases de recherche, un prétraitement (S401) du signal représentatif, ledit prétraitement comprenant au moins l'un parmi
- une réduction de bruit (S401_2, S500-S506) sur base d'une décomposition par ondelettes ;
- une génération (S401_1) de données manquantes dans le signal représentatif.

3. Procédé selon l'une des revendications 1 ou 2, dans lequel la sonde est une sonde à pression différentielle et la recherche d'un événement de premier type comprend la recherche (S402_1) d'un état bouché de la sonde.

4. Procédé selon la revendication 3, **caractérisé en ce qu'**un état bouché de la sonde est identifié lors de la recherche si
- un motif à périodicité journalière est identifié dans le signal représentatif ; et
- pour une journée pour laquelle un motif périodique est identifié, un maximum du signal représentatif sur la journée se retrouve dans un intervalle de temps autour du lever du soleil et un minimum du signal représentatif pour la journée se retrouve dans un intervalle de temps comprenant le coucher du soleil, les intervalles de temps étant disjoints.

5. Procédé selon l'une des revendications 3 ou 4, comprenant l'exclusion, lors de la phase de recherche d'au moins un événement du second type, des parties du signal correspondant à une période de temps incluant au moins le jour pour lequel un événement de sonde bouchée a été identifié.

6. Procédé selon l'une des revendications 1 à 5, dans lequel la recherche d'un événement de premier type comprend la recherche (S402_2) d'un événement de déconnexion et reconnexion de la sonde.

7. Procédé selon la revendication 6, dans lequel la recherche d'une déconnexion et reconnexion d'une sonde comprend :
- l'identification (S1303) dans le signal d'une phase de variation du signal comprenant une variation dans le sens négatif puis dans le sens positif, respectivement l'inverse ;
- la détermination (S1304) que le niveau de liquide indiqué par le signal représentatif avant et après une phase de variation est sensiblement le même, et en cas de détermination positive, identifier (S1305) un événement de déconnexion et de reconnexion sans événement de vol en parallèle, et en cas de détermination négative, identifier (S1306) un événement de déconnexion et reconnexion avec potentiellement un événement de vol en parallèle.

8. Procédé selon l'une des revendications 1 à 7, dans lequel la recherche d'un événement de premier type comprend la recherche (S402_3) d'un événement de remplissage du contenant en liquide.

9. Procédé selon la revendication 8, dans lequel la recherche (S402_3) d'un remplissage du contenant en liquide comprend :
- l'identification (S1503) dans le signal d'une variation positive du niveau de liquide,
- la détermination (S1504) si la variation positive est supérieure à un seuil de quantité de liquide pendant une période de temps donnée et, si la détermination est positive (S1505), identifier un événement de remplissage et dans le cas contraire, ne pas identifier (S1506) un événement de remplissage.

10. Procédé selon l'une des revendications 1 à 7, dans lequel la recherche d'un événement de second type comprend la recherche d'un événement de remplissage du contenant en liquide.

11. Procédé selon l'une des revendications 1 à 10, dans lequel la recherche d'un événement de second type comprend la recherche d'un événement de vol de liquide.

12. Procédé selon la revendication 11 dans lequel la recherche d'un événement de vol de liquide comprend:
- la recherche d'au moins une baisse du niveau de liquide dans le signal représentatif ;
- la détermination (S2103, S2104, S2105) pour chaque baisse identifiée si cette baisse est supérieure à un seuil de quantité de liquide pendant une période de temps donnée et, si la détermination est positive, identifier un événement de vol et dans le cas contraire, ne pas identifier un événement de vol.

13. Procédé selon la revendication 12, dans lequel, lorsqu'une baisse identifiée suit ou se superpose avec un événement du premier type, le seuil de quantité de liquide pendant une période de temps donnée est inférieur par rapport au seuil utilisé lorsqu'une baisse identifiée ne suit pas ou ne se superpose pas avec un événement du premier type.

14. Dispositif de traitement (109) comprenant des moyens pour mettre en œuvre un procédé selon l'une des revendications 1 à 13.

15. Support d'enregistrement lisible par un dispositif de traitement muni d'un processeur, ledit support comprenant des instructions de programme logiciel qui, lorsque le programme logiciel est exécuté par un processeur d'un dispositif de traitement, conduisent le dispositif de traitement à mettre en œuvre un procédé selon l'une des revendications 1 à 13.

## Patentansprüche

1. Verfahren, das durch eine Verarbeitungsvorrichtung (109) durchgeführt wird, die einen Prozessor umfasst, umfassend
- Erhalten (S400) eines aus Messungen einer Sonde erhaltenen Signals, das für die Entwicklung des Füllstands einer Flüssigkeit in einem Behälter repräsentativ ist;
- Suchen (S402) im Signal nach mindestens einem Ereignis eines ersten Typs; wobei einem bestimmten Ereignis eine oder mehrere Signaleigenschaften zugeordnet sind, die eine Identifizierung des bestimmten Ereignisses im repräsentativen Signal ermöglichen, und wobei ein Ereignis des ersten Typs ein Ereignis ist, für das kein Alarm generiert wird; **gekennzeichnet durch**
- Kennzeichnen (S403) von Zeiträumen des repräsentativen Signals, die einem Ereignis des ersten Typs entsprechen, wobei das oder die Ereignis(se) des ersten Typs für diese Zeiträume identifiziert werden;
- Suchen, nach dem Kennzeichnen, im repräsentativen Signal nach mindestens einem bestimmten Ereignis eines zweiten Typs; wobei ein Ereignis des zweiten Typs ein Ereignis ist, für das ein Alarm generiert wird;
- Suchen nach einem bestimmten Ereignis des zweiten Typs, umfassend das Disqualifizieren von Signalzeiträumen, die mit bestimmten Ereignissen des ersten Typs gekennzeichnet sind, und Beibehalten von Signalzeiträumen, die für andere Ereignisse des ersten Typs gekennzeichnet sind;
- Generieren eines Alarms für das oder die im Signal identifizierte(n) Ereignis(se) des zweiten Typs.

2. Verfahren nach Anspruch 1, umfassend, vor den Suchphasen, ein Vorverarbeiten (S401) des repräsentativen Signals, wobei das Vorverarbeiten mindestens eines umfasst von
- einer Rauschunterdrückung (S401_2, S500-S506) basierend auf einer Wavelet-Zerlegung;
- einer Generierung (S401_1) fehlender Daten im repräsentativen Signal.

3. Verfahren nach einem der Ansprüche 1 oder 2, wobei die Sonde eine Differenzdrucksonde ist und das Suchen nach einem Ereignis des ersten Typs das Suchen (S402_1) nach einem verstopften Zustand der Sonde umfasst.

4. Verfahren nach Anspruch 3, **dadurch gekennzeichnet, dass** ein verstopfter Zustand der Sonde während der Suche identifiziert wird, wenn
- in dem repräsentativen Signal ein Muster mit täglicher Periodizität identifiziert wird; und
- für einen Tag, für den ein periodisches Muster identifiziert wird, ein Maximum des repräsentativen Signals über den Tag in einem Zeitintervall um den Sonnenaufgang herum liegt und ein Minimum des repräsentativen Signals für den Tag in einem Zeitintervall umfassend den Sonnenuntergang liegt, wobei die Zeitintervalle disjunkt sind.

5. Verfahren nach einem der Ansprüche 3 oder 4, umfassend das Ausschließen, während der Phase des Suchens nach mindestens einem Ereignis des zweiten Typs, von Teilen des Signals, die einem Zeitraum entsprechen, der mindestens den Tag einschließt, für den ein Ereignis einer verstopften Sonde identifiziert wurde.

6. Verfahren nach einem der Ansprüche 1 bis 5, wobei das Suchen nach einem Ereignis des ersten Typs das Suchen (S402_2) nach einem Ereignis des Trennens und Wiederverbindens der Sonde umfasst.

7. Verfahren nach Anspruch 6, wobei das Suchen nach einer Trennung und Wiederverbindung einer Sonde Folgendes umfasst:
- Identifizieren (S1303) einer Veränderungsphase des Signals im Signal, umfassend eine Veränderung in die negative Richtung und dann in die positive Richtung bzw. umgekehrt;
- Bestimmen (S1304), dass der durch das repräsentative Signal angezeigte Füllstand einer Flüssigkeit vor und nach einer Veränderungsphase im Wesentlichen derselbe ist, und, falls dies als positiv bestimmt wurde, Identifizieren (S1305) eines Trennungs- und Wiederverbindungsereignisses ohne paralleles Diebstahlereignis, und, falls dies als negativ bestimmt wurde, Identifizieren (S1306) eines Trennungs- und Wiederverbindungsereignisses mit potenziell einem parallelen Diebstahlereignis.

8. Verfahren nach einem der Ansprüche 1 bis 7, wobei das Suchen nach einem Ereignis des ersten Typs das Suchen (S402_3) nach einem Ereignis des Befüllens des Behälters mit Flüssigkeit umfasst.

9. Verfahren nach Anspruch 8, wobei das Suchen (S402_3) nach einer Befüllung des Behälters mit Flüssigkeit Folgendes umfasst:
- Identifizieren (S1503) einer positiven Veränderung des Füllstands einer Flüssigkeit im Signal,
- Bestimmen (S1504), ob die positive Veränderung während eines bestimmten Zeitraums oberhalb eines Schwellenwerts für die Flüssigkeitsmenge liegt, und, wenn das Bestimmen positiv ist (S1505), Identifizieren eines Ereignisses des Befüllens, und anderenfalls Nichtidentifizieren (S1506) eines Ereignisses des Befüllens.

10. Verfahren nach einem der Ansprüche 1 bis 7, wobei das Suchen nach einem Ereignis des zweiten Typs das Suchen nach einem Ereignis des Befüllens des Behälters mit Flüssigkeit umfasst.

11. Verfahren nach einem der Ansprüche 1 bis 10, wobei das Suchen nach einem Ereignis des zweiten Typs das Suchen nach einem Flüssigkeitsdiebstahlereignis umfasst.

12. Verfahren nach Anspruch 11, wobei das Suchen nach einem Flüssigkeitsdiebstahlereignis Folgendes umfasst:
- Suchen nach mindestens einem Absinken des Füllstands einer Flüssigkeit im repräsentativen Signal;
- Bestimmen (S2103, S2104, S2105) für jedes identifizierte Absinken, ob dieses Absinken während eines bestimmten Zeitraums oberhalb eines Schwellenwerts für die Flüssigkeitsmenge liegt, und, wenn das Bestimmen positiv ist, Identifizieren eines Diebstahlereignisses und andernfalls Nichtidentifizieren eines Diebstahlereignisses.

13. Verfahren nach Anspruch 12, wobei, wenn ein identifiziertes Absinken auf ein Ereignis des ersten Typs folgt oder sich mit diesem überschneidet, der Schwellenwert für die Flüssigkeitsmenge während eines bestimmten Zeitraums unterhalb des Schwellenwerts liegt, der verwendet wird, wenn ein identifiziertes Absinken nicht auf ein Ereignis des ersten Typs folgt oder sich mit diesem überschneidet.

14. Verarbeitungsvorrichtung (109), umfassend Mittel zum Durchführen eines Verfahrens nach einem der Ansprüche 1 bis 13.

15. Speichermedium, das von einer Verarbeitungsvorrichtung mit einem Prozessor gelesen werden kann, wobei das Medium Softwareprogrammanweisungen umfasst, die, wenn das Softwareprogramm von einem Prozessor einer Verarbeitungsvorrichtung ausgeführt wird, die Verarbeitungsvorrichtung dazu veranlassen, ein Verfahren nach einem der Ansprüche 1 bis 13 durchzuführen.

## Claims

1. Method carried out by a processing device (109) comprising a processor, the method comprising
- obtaining (S400) a signal, obtained from probe measurements, representative of the changes in the level of a liquid in a container;
- searching (S402), in the signal, for at least one event of a first type; a given event being associated with one or more signal characteristics enabling identification of the given event in the representative signal and an event of the first type being an event for which no alarm is generated; **characterized by**
- labeling (S403) time periods of the representative signal corresponding to an event of the first type with the event or events of the first type identified for these periods;
- following labeling, searching, in the representative signal, for at least one given event of a second type; an event of the second type being an event for which an alarm is generated;
- searching for a given event of the second type having the disqualification of signal time periods labeled with certain events of the first type, and retaining signal time periods labeled with other events of the first type;
- generating an alarm for the event or events of the second type identified in the signal.

2. Method according to claim 1, comprising, prior to the search phases, preprocessing (S401) of the representative signal, said preprocessing comprising at least one of the following
- noise reduction (S401_2, S500-S506) based on wavelet decomposition;
- generation (S401_1) of missing data in the representative signal.

3. Method according to either of claims 1 or 2, wherein the probe is a differential pressure probe and the search for an event of the first type comprises searching (S402_1) for a blocked state of the probe.

4. Method according to claim 3, **characterized in that** a blocked condition of the probe is identified during the search if
- a daily-periodic pattern is identified in the representative signal; and
- for a day for which a periodic pattern is identified, a maximum of the representative signal for the day is found in a time interval around sunrise and a minimum of the representative signal for the day is found in a time interval including sunset, the time intervals being disjointed.

5. Method according to either of claims 3 or 4, comprising the exclusion, during the phase of searching for at least one event of the second type, of the parts of the signal corresponding to a time period including at least the day for which a blocked probe event has been identified.

6. Method according to any of claims 1 to 5, wherein the search for an event of the first type comprises searching (S402_2) for a probe disconnection and reconnection event.

7. Method according to claim 6, wherein searching for disconnection and reconnection of a probe comprises:
- identifying (S1303) in the signal a variation phase of the signal comprising a variation in the negative direction then in the positive direction, respectively the reverse;
- determining (S1304) that the liquid level indicated by the representative signal before and after a variation phase is substantially the same, and in the event of a positive determination, identifying (S1305) a disconnection and reconnection event with no parallel theft event, and in the event of a negative determination, identifying (S1306) a disconnection and reconnection event with potentially a parallel theft event.

8. Method according to any of claims 1 to 7, wherein the search for an event of the first type comprises searching (S402_3) for an event of filling the container with liquid.

9. Method according to claim 8, wherein the search (S402_3) for a filling of the container with liquid comprises:
- identifying (S1503) in the signal a positive liquid level variation,
- determining (S1504) whether the positive variation is greater than a liquid quantity threshold over a given time period and, if the determination is positive (S1505), identifying a filling event and, if not, not identifying (S1506) a filling event.

10. Method according to any of claims 1 to 7, wherein the search for an event of the second type comprises searching for an event of filling the container with liquid.

11. Method according to any of claims 1 to 10, wherein the search for an event of the second type comprises searching for a liquid theft event.

12. Method according to claim 11 wherein the search for a liquid theft event comprises:
- searching for at least one decrease in the liquid level in the representative signal;
- determining (S2103, S2104, S2105) for each identified decrease whether this decrease is greater than a liquid quantity threshold over a given time period and, if the determination is positive, identifying a theft event and, if not, not identifying a theft event.

13. Method according to claim 12, wherein, when an identified decrease follows or overlaps with an event of the first type, the liquid quantity threshold over a given time period is lower than the threshold used when an identified decrease does not follow or overlap with an event of the first type.

14. Processing device (109), comprising means for carrying out a method according to any of claims 1 to 13.

15. Recording medium readable by a processing device provided with a processor, said medium comprising software program instructions which, when the software program is executed by a processing device processor, cause the processing device to carry out a method according to any of claims 1 to 13.
